# EUROPEAN PATENT SPECIFICATION

(11) **EP 2 188 093 B1**
(45) Date of publication and mention of the grant of the patent: **11.05.2011**
(21) Application number: 08782716.8
(22) Date of filing: 24.07.2008
(51) Int. Cl.: B24C 7/00, F16K 5/04, B05B 7/14

(54) **AN ABRASIVE FLOW CONTROL STRUCTURE, AN ABRASIVE MATERIAL CLASSIFIER AND BLASTING SYSTEMS INCORPORATING SAME**
STRUKTUR ZUR STEUERUNG EINES SCHLEIFMITTELSTROMS, SCHLEIFMITTELKLASSIFIZIERER UND STRAHLSYSTEME DAMIT
STRUCTURE DE RÉGULATION DE FLUX ABRASIF, CLASSIFICATION DE MATÉRIAU ABRASIF ET SYSTÈME DE DÉCAPAGE INCORPORANT CELUI-CI

(30) Priority: 01.08.2007 VN 200701571; 29.08.2007 VN 200701748; 05.10.2007 VN 200702041
(43) Date of publication of application: 26.05.2010
(73) Proprietor: Nghia, Do Huu, Ho Chi Minh City (VN)
(72) Inventor: Nghia, Do Huu, Ho Chi Minh City (VN)
(74) Representative: Fleck, Hermann-Josef
(86) International application number: PCT/VN2008/000002
(87) International publication number: WO 2009/018590

(56) References cited:
- EP-A- 0 992 221
- DE-A1- 2 856 536
- GB-A- 2 337 953
- US-A- 2 399 385
- US-A- 4 993 200
- US-B1- 7 040 959

## Description

### Field of the invention

The present invention is related to formation and control of blast materials dispersed in high-pressure air for cleaning, removing rust and old coatings, etc. on metallic surfaces before painting and coating. The invention is particularly related to structures for forming abrasive flows by compressed air and blast systems for treatment of surfaces by means of abrasive flows. **Description of the related arts**

The use of abrasive materials, particularly flows of abrasive particles dispersed in a suitable vehicle, for treatment of metallic surfaces is well known, particularly in shipbuilding and ship repair.

To date, technologies of abrasive flows have been developed towards two directions, namely wet and dry abrasive flows.

Methods of dry abrasive flows employ abrasive particles dispersed in dry high-pressure air, whereas in methods of wet abrasive flows employ the same with water is added to the flows in form of mist.

With methods of wet abrasive flows, less dust is produced in the cleaning process and therefore those methods are preferred when work safety and environmental protection are taken into account. Nevertheless, a main drawback of those methods is the necessity of a suitable means for treating the newly blasted surface in order to avoid of the formation of colloidal oxides when it contacts with wet air in the abrasive flow.

The most effective measure associated with wet abrasive flows is the use of special compositions, which are capable of coating wet surfaces and at the same time treating any impurities remained on the newly blasted surfaces. Among other things, a weak point of this measure as well as the methods of wet abrasive flow is its high cost.

In contrast, with methods of dry abrasive flow, the newly blasted surfaces are not wetted and therefore not oxidized and can be coated with paints of lower prices.

Noteworthy weak points of conventional methods include high consumption of abrasive materials, low blasting and cleaning efficiency, and dust pollution.

One of the main causes of those weak points is that blast systems are unable to control the flow rate and speed of abrasive flows by means of any devices which are incorporated with the blast guns and in practice, operators employ the maxima of the flow rate and pressure of compressed air as well as the flow rate of abrasive materials.

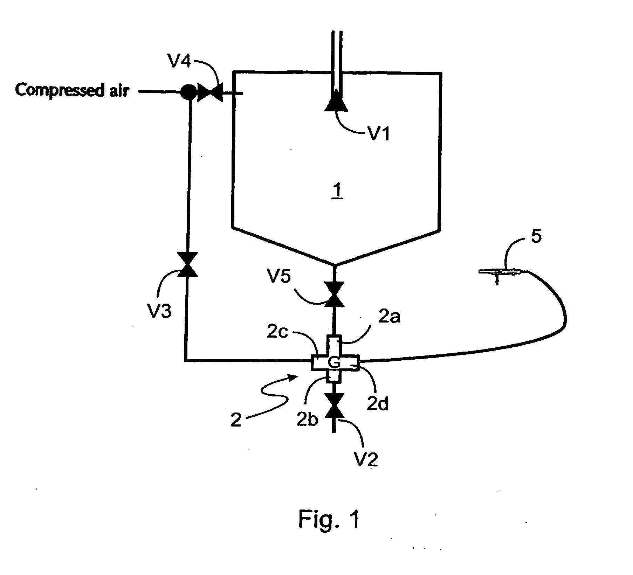

In the blast systems known in the art, abrasive particles are dispersed in an air flow and directly led to a blast gun as illustrated in Figure 1.

Referring now to Figure 1, a blast system known in the art includes an abrasive material storing tank 1 with a one-way valve V1 operated by compressed air, and mounted at the bottom of the storing tank 1 are respectively an abrasive material valve V5, a cross-shaped tube 2 with an upper mouth 2a as the inlet of abrasive particles from the storing tank 1 to a dispersion space G and a lower mouth 2b as a gate for discharging abrasive particles out of the space G when required by opening a discharging valve V2, a left mouth as a compressed air inlet 2c for compressed air to enter the space G and a right mouth as an abrasive flow outlet 2d for the abrasive flow to go out.

When compressed air is led into the compressed air inlet 2c, it is turbulently mixed with abrasive particles from abrasive material inlet 2a, forming an abrasive flow going out of the outlet 2d to a blast gun 5. The flow rate and pressure of the abrasive flow is adjusted by means of a compressed air valve V3.

In addition to control of the inflow of abrasive particles into the cross-shaped tube body 2 by means of the abrasive material valve V5, the system also includes a pressure control valve V4 for controlling the pressure inside the storing tank, thereby adjusting the inflow of abrasive particles into the inlet 2a.

A drawback of this blast system is that it can only used with an air flow of limited flow rates, which are usually in the range of 3 - 11 m³/minutes because in practice, when the air flow has a higher flow rate, abrasive particles fail to enter the cross-shaped tube body 2, that is no abrasive flow is formed, regardless of the pressure inside the storing tank 1.

Furthermore, adjustment of the valve V5 brings in very limited effect and in fact, the valve V5 has indeed no adjusting effect when the air flow reaches a certain flow rate and/or speed. Theoretically, the efficiency of blasting or abrasion is higher when the kinetic energy of the abrasive flow is increased. As such, since an increase in the flow rate and/or speed of the air flow has limited effect, the kinetic energy of abrasive flows in the blast systems known in the art is also limited and the efficiency of cleaning is therefore low. In other words, a weak point of the dry blast systems known in the art is their low cleaning efficiency, particularly when the consumption rate of abrasive particles is taken into account. This also occurs in wet blast systems.

Because it is impossible to adjust the flow of abrasive particles, conventional blast systems are usually operated with a maximum flow of abrasive particles and with a medium flow rate of compressed air, the consumption of abrasive particles is then even bigger. That leads to heavy dust pollution at the workplace of blast systems since a large part of abrasive particles become dust without blasting, i.e. without any cleaning effect.

Moreover, those blast systems have a latent risk of severe pollution if large amounts of used abrasive particles are not or impossible to be treated because of economic and technical causes. Such a drawback can even drive the development of the shipbuilding industry into a deadlock.

Besides, because the inflow of abrasive particles into the cross-shaped tube body 2 is dependent on the weight, i.e. the specific density of abrasive particles and the pressure difference between the abrasive material inlet 2a and the air flow inlet 2c, the systems can only operate in a stable manner with abrasive particles having nearly the same dimension and specific density.

As such, another weak point of conventional blast systems is low stability. In fact, they are easy to be choked or become unworkable when a different sort of abrasive material is used, or when abrasive particles have not the same dimensions and specific density, for instance, when sand is used as abrasive particles.

Such poor stability of conventional blast system also results in extreme difficulties in adjusting the abrasive flow.

There are some solutions for operators to adjust the flow rate of abrasive particles as well as abrasive flows by means of remote-controlled devices, particularly for controlling the flow rate and pressures of compressed air, and the flow rate of abrasive particles to be fed to blast guns. Nevertheless, first, such systems are costly but their durability is low, particularly when they must work in a dusty environment of dry abrasive treatment. Second, such advanced blast systems require abrasive particles that have nearly the same physical properties, i.e. specific density and particle size, and more particularly, they must be equipped with specific apparatus for feeding abrasive particles that are never compatible to various sorts of abrasive materials.

Furthermore, abrasive materials with almost the same physical properties are usually expensive and blast treatment therewith is therefore costly.

Meanwhile, natural sand after preliminary screening has excellent properties such as high blasting capacity, large availability and low cost. A weak point of sand after preliminary screening is its uneven particle size and specific density, which disable it from being used in any advanced dry blast systems, for instance those systems equipped with remote-controlled panels.

Furthermore, the blast systems known in the art can hardly use abrasive particles of uneven particle size like sand, if sand is not sieved or classified by particle sizes or if sand is wet. In practice, such sand can quickly choke the tube that leads it from the storing tank to blast guns as well as blast guns.

Another weak point of sand blast systems known in the art is low cleaning efficiency due to low speed of the sand blast flow.

Because the flow of sand is not controllable, sand blast systems known in the art are usually operated at maximum air flow and sand flow then the consumption of sand is very high.

Also due to poor adjustability of conventional blast systems, the addition of water in form of mist into the abrasive flow is not easy.

Nevertheless, if water is added into an abrasive flow at a certain ratio, it helps significantly reduce dust, meaning that dust produced from the blasting to the surface by abrasive particles will quickly fall down and therefore affect less on blast gun operators' health.

Therefore, there is a high demand for a blast system with high efficiency and stability, low consumption of abrasive materials, and moreover, with ability of adjustment so as to use various sorts of abrasive particles, preferably sand, in which blast gun operators can easily adjust the abrasive flow without choke, and more preferably, with ability to easily convert from a dry abrasive flow into a wet abrasive flow.

In conventional blast systems, although storing tanks accompanying blast guns are designed and fabricated with relatively large volumes, they are usually filled at minimum level in order to avoid of choke. Therefore, the operation of the blast systems must be interrupted for feeding abrasive particles to storing tanks accompanying blast guns. In advanced systems that use standard particles and remote-controlled devices to reach high blast efficiency, the interval between two consecutive feedings of abrasive particles is still long yet for other systems, the feeding time is so long that their effectiveness is worsened. Therefore, there is a high demand for a blast system, in which abrasive particles can be fed continuously to the storing tank associated with the blast gun.

The present invention is provided to satisfy the aforementioned demands.

An abrasive flow control device according to the preamble of claim 5 is disclosed in EP 0 992 221.

### Disclosure of the invention

In a first feature of the present invention, it is an objective of the invention to provide a structure to continuously adjust the abrasive flow at the blast gun of blast systems without any remote-controlled device, in particularly to adjust the flow rate of abrasive materials to be fed to the blast gun, and the flow rate of inflow of high-pressure air coming into the blast gun.

A second objective of the present invention is to provide a blast system that can work continuously in a long time, in which abrasive materials are fed continuously to storing tanks that accompany blast guns.

In a second aspect, it is third objective of the present invention to provide a simple structure to provide an abrasive flow of high kinetic energy from abrasive materials and a flow of compressed air of high flow rate and speed, that allow adjustment of the abrasive flow at ease and furthermore, the structure can be adjusted for using any sort of abrasive materials, preferably sand.

A fourth objective of the present invention is a wet or dry blast system with an abrasive flow of high cleaning effect, low dust and easy adjustment.

The invention achieves the first objective by adjusting a hole, though which abrasive materials are suctioned to an abrasive particle suctioning pipe, by means of two coaxial tubes pivotable to each other, on the tubular walls of the two tubes have holes with substantially similar positions and dimensions, and at the same time, by adjusting the negative pressure that suctions abrasive materials by means of adjusting the open of a vent hole from the adjusting structure to the air.

The invention achieves the second objective by incorporating the continuously adjusting structure with the storing tank and the system to supply abrasive materials by means of compressed air.

The invention achieves the third objective by providing a structure for making a high-speed abrasive flow, the structure includes a cross-shaped tube with an upper mouth to receive abrasive materials and a lower mouth 2b to discharge abrasive materials when required, an outer horizontal tube inserted horizontally into the cross-shaped tube body 2 with a first end expanding to a structure to connect with the abrasive flow guide tube and having at least a first through-hole near the plane perpendicular to the horizontal axis and containing the vertical axis of the cross-shaped tube body 2, an inner horizontal tube inserted into the horizontal outer tube 32 and the inner diameter of the inner tube is varied such that a dispersion space with horizontal Venturi structure is formed inside the cross-shaped tube body 2.

The invention achieves the forth objective by providing a valve to adjust the inflow of abrasive materials into the dispersion space, the adjusting valve comprises a blocking tube which is coaxially installed with the inner tube and fixed to the cross-shaped tube body 2, the blocking tube has at least a second through-hole at the same position as that of the first through-hole.

### Brief description of the figures

The nature and further characteristics and advantages of the present invention will be described in more detailed with reference to illustrative figures, where:
Figure 1 is a diagram showing a blast system known in the art;
Figure 2 is a perspective view of an abrasive flow control abrasive flow control structure in the first aspect of the invention;
Figure 3 is a perspective exploded view of the structure in Figure 2;
Figures 4a and 4b are views of the cross-sections A-A and B-B, respectively in Figure 2;
Figure 5 diagram showing the abrasive flow control structure in Figure 2, in where Figure 5a shows the abrasive material suctioning hole fully opened and Figure 5b shows the abrasive material suctioning hole partially closed;
Figure 6 is a diagram showing a blast system in the first aspect of the invention.
Figure 7 is a perspective view of an abrasive flow control structure in a second aspect of the invention;
Figure 8 is a perspective exploded view showing main components of the structure in Figure 7;
Figure 9 is a view of the cross-section showing an embodiment of the structure in the second aspect of the invention;
Figure 10 is an enlarged view of Part I of the structure Figure 4;
Figure 11 is a diagram showing a blast system in the second aspect of the invention.

In those illustrative figures, similar or identical components are given the same referrals.

### Definitions

In this disclosure, the term "negative pressure" means a relative pressure lower than 0, meaning that the absolute pressure is lower than the atmospheric pressure (1at).

The term "abrasive materials" or "abrasive particles" means mixtures of particles of standard sizes, fine particles and dust.

The term "abrasive particles of standard sizes" or "standard abrasive particles" means abrasive particles that have suitable size and are effective in blasting.

The term "fine particles" means abrasive particles smaller than standard sizes, and therefore the blasting effect thereof is poor.

The term "dust" means particles that easy to diffuse in the air, causing dusty conditions without blasting effect during the application of abrasive flows.

### Detailed description of the invention

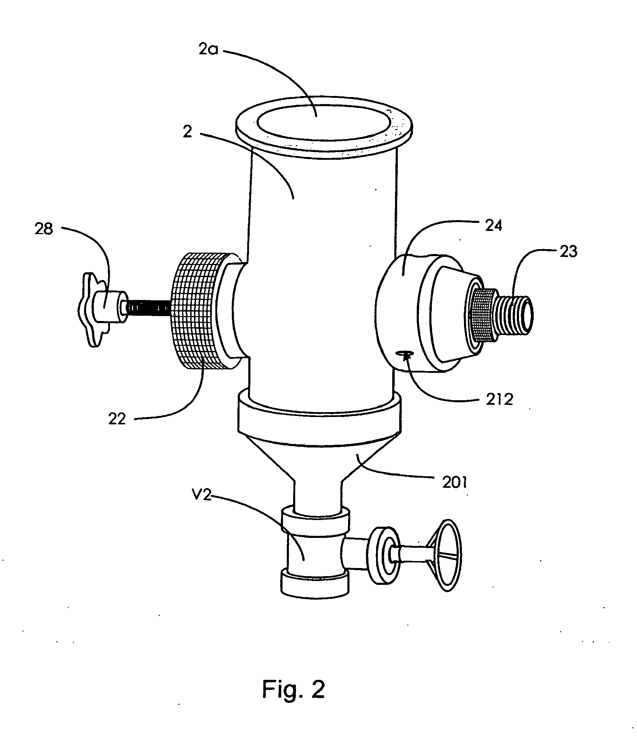

As illustrated in Figs. 2 - 5, an abrasive flow control structure abrasive flow control structure in the first aspect of the present invention comprises:
- a cross-shaped tube body 2 having an upper mouth 2a as abrasive material inlet, a lower mouth 2b as an abrasive material discharging gate, a left mouth 2c and a right mouth 2c; the upper mouth 2a extended to be a flange to mount to an outlet of an abrasive material storing tank 1 of a blast machine;
- a discharging valve V2 mounted to the lower mouth 2b of the cross-shaped tube body 2 via a threaded funnel-shape connecting part 201 as illustrated;
- a suction tube 21 inserted through the left mouth 2c and right mouth 2c, and being coaxial with a line linking the centers of the left mouth 2c and the right mouth 2c, respectively, and on the tubular wall of the suction tube 21 it is provided at least one hole 211 facing the lower mouth 2b of the body 2, and at least one vent hole 212 open to the outside of the cross-shaped tube body 2;
- a stopping cover 22 stopping an end of the suction tube 21;
- an tubular outlet 23 mounted to an end of the suction tube 21, a part of the tubular outlet 23 that is located inside the suction tube 21 has an outer diameter smaller than the inner diameter of the suction tube 21, thereby a passage for the air from outside to the inside of the cross-shaped tube body 2 via vent hole 212 is formed;
- a negative pressure adjusting nut 24 with at least a negative pressure adjusting hole 241 which has substantially the same position and dimension as the vent hole 212 of the suction tube 21;
- an outer tube 25 mounted coaxially and pivotally outside the suction tube 21, and on the tubular wall of the horizontal outer tube 25 also has at least a hole 251 with the position and dimension substantially similar with those of the hole 211 of the suction tube 21 so as to provide the entrance for abrasive materials with an open degree varying continuously when the suction tube 21 and the horizontal outer tube 25 are pivoted one another.

In this structure, the hole for suctioning abrasive material is the orifice created by the holes 211 and 251 respectively on the suction/conducting tube 21 and the horizontal outer tube 25. By pivoting the horizontal outer tube 25, it is possible to adjust the abrasive material suctioning hole from closure to full open, thereby the flow rate of the abrasive material can be adjusted continuously as required.

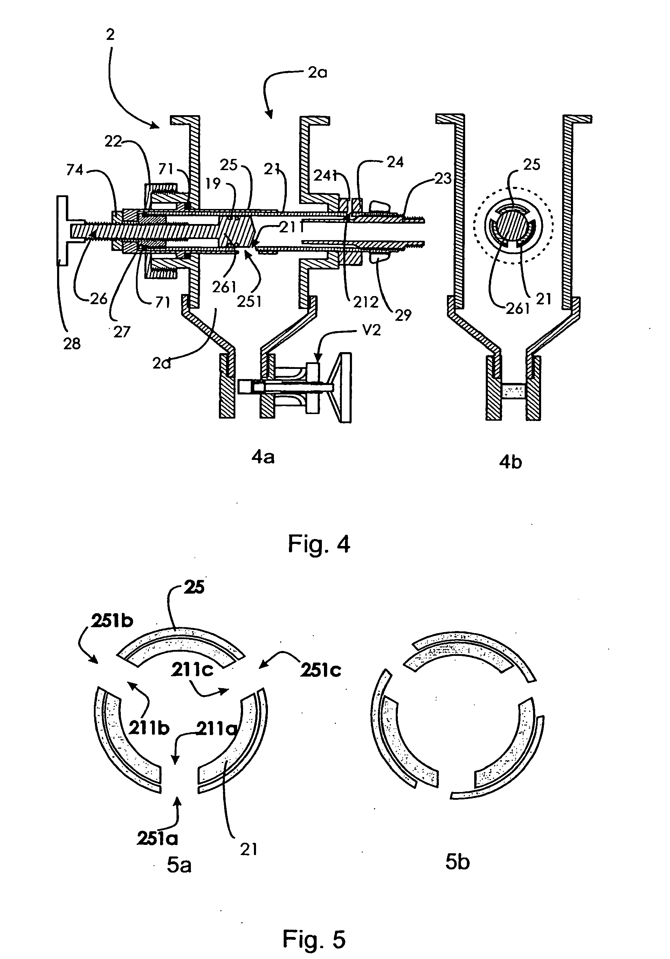

In a preferred embodiment, there are three suction tube holes 211 and three outer tube holes 251 respectively on the suction tube 21 and the horizontal outer tube 25 and the holes have the centers thereof located on a plane perpendicular to the suction tube 21, and at least one suction tube hole 211 and one outer tube hole 251 face the lower mouth 2b of the cross-shaped tube body 2 body. In this embodiment, the abrasive material flow into the suction tube is dispersed better. This embodiment is illustrated in Figures 4 and Figure 5 with respective suction tube holes 211a, 211b, 211c and outer tube holes 251a, 251b and 251c.

In a further preferred embodiment, the numbers of suction tube holes 211 and the horizontal outer tube holes 251 are four and the centers thereof are located on a plane perpendicular to the suction tube 21, and at least two holes thereof are directed towards the lower mouth 2b of the cross-shaped tube body 2.

In another embodiment, a device for tuning the turning movement of the horizontal outer tube 25 is made with a screw in combination with threads formed on the outer wall of the horizontal outer tube 32. Nevertheless, such an embodiment is complicated.

In a preferred embodiment, the abrasive flow control structure according to the invention further includes a stopping rod 26 tightly and slidably mounted inside the suction tube 21, a first end of the stopping rod extending to be a cylindrical stopping head 261 which projects to the suction tube holes as illustrated in Fig. 4, and is positioned such that when the stopping rod 26 reciprocally moves inside the suction tube 21, the cylindrical stopping head 261 closes or opens the abrasive material inlet.

In a detailed embodiment, the stopping rod 26 is fabricated with threads to mount to a positioning nut 27, and then the positioning nut 27 is thread-mounted inside the suction/conducting tube 21. This embodiment allows tuning the open of the abrasive material suctioning hole, which is tuning the abrasive material flow through the structure by turning an adjusting knob 28 mounted to a second end of the stopping rod 26.

In yet another preferred embodiment, a part of the cylindrical stopping head 261 that projects to the abrasive material inlet has a conical surface. This avoids the abrasive material, particularly the abrasive materials having uneven particle sizes such as preliminary screened sand, from choking. A surprising result with the cylindrical stopping head 261 having a conical projecting head is that even with wet sand, the structure is not choked during operation. That is a feature which has never seen in any blast machines known in the art. That characteristic allows blast machines according to the invention to use sand of certain moisture as abrasive material in order to reduce dust in the blasting process, and the moisture can be adjusted so as not to wet the metallic surface after blasting. That means the abrasive flow control structure according to the invention can, in the one hand, reduce dust pollution, and at the same time, keep the metallic surface dry enough after blasting and therefore ready for coating without using any costly specialized paints.

During operation, the tubular outlet 23 is a connector connecting with an abrasive flow tube which is in turned connected to a blast gun 5. When the abrasive material is fed to the abrasive flow control structure according to the invention via upper mouth 2a, the abrasive material fills in the cross-shaped tube body 2, closing the upper mouth 2a then the negative pressure inside the cross-shaped tube body 2is mostly dependent on the open of the vent passage. In other words, it is possible to adjust the vacuum pressure (or negative pressure) inside the cross-shaped tube body 2 by pivoting the negative pressure adjusting nut 24 to a suitable position.

In details, that is, when the open of the vent passage is small, the negative pressure inside the cross-shaped tube body 2 is high and the force suctioning the abrasive material is high. In opposite, when the open of the vent passage is large, the negative pressure inside the cross-shaped tube body 2 is small, the force suctioning the abrasive material is small.

As such, by combining the adjustments of the horizontal outer tube 25 and the negative pressure adjusting nut 24 and/or the cylindrical stopping head 261, it is possible to adjust continuously the abrasive material flow into the blast gun via the outlet of the structure according to the invention.

In a practical embodiment, the surface 337 of the projecting end of the horizontal outer tube 25 is made rough, and at the same time, the second end of the stopping rod is mounted to an adjusting knob 28, both for conveniently handling.

Thus, by locking the discharging valve V2, and turning the negative pressure adjusting nut 24 to a position where the negative pressure adjusting hole 241 overlapping the vent hole 212 for the inside of the cross-shaped tube body 2 to be open to the ambient atmosphere, when the blast gun 5 is operated, the suctioning force from the blast gun 5 (as a result of the Venturi structure of the blast gun 5) creates a negative pressure suctioning the air flow, forming a flow of abrasive material containing air going through the suction tube 21. Then the negative pressure adjusting nut 24 may be turned to close partially the vent hole 212 that is to close a part of the vent passage from inside the cross-shaped tube body 2 to the ambience so as to lower the absolute pressure therein and thereby increase the abrasive material suctioning force.

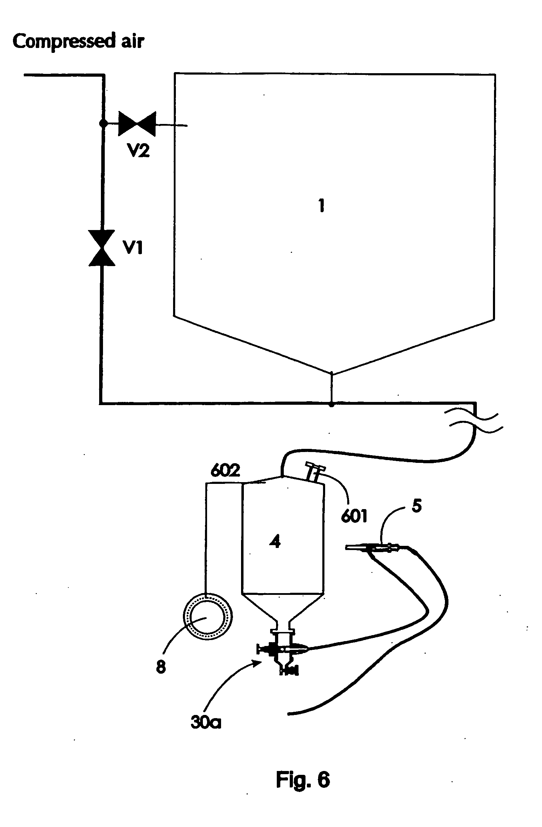

As such, the abrasive material flow via structure according to the invention is adjusted not only in term of flow rate of the abrasive flow by means of the open of the passages formed between the suction tube 21 and the horizontal outer tube 25 and/or the cylindrical stopping head 261 but also in term of speed by the open of the vent passage. Since those opens can be adjusted continuously, in details, the open of the passage formed between the suction tube 21 and the horizontal outer tube 25 is adjusted by pivoting the horizontal outer tube 25 against the suction tube 21 as illustrated in Figure 6, and/or adjusting the stopping rod 26 to move and project so as to reduce the open of the passage, and at the same time, the open of the vent hole 212 to the ambience is adjusted by turning the negative pressure adjusting nut 24 against the suction tube 21 with the same mechanism.

Functions of the stopping nut 74 (only shown in Figure 4) and the fixing nut 29 are fixing the horizontal outer tube 25 and negative pressure adjusting nut 24, respectively after a suitable adjustment for the desired flow rate of the abrasive material.

It is apparent that an advantage of the abrasive flow control structure according to the invention is that an operator thereof can adjust the flow rate of the abrasive material by means of some simple operations and without any sophisticated and complicated instruments.

Another advantage of the abrasive flow control structure according to the invention is that it allows the use of any abrasive material of any particle size and specific density.

A further advantage of the abrasive flow control structure according to the invention is that an operation can lock the flow of the abrasive material to the blast gun 5 by pivoting the horizontal outer tube 25 to a position where the hole(s) 211 on the suction tube 21 is fully closed, and at the same time fully opening the vent hole 212. At that position, only the air passes the tubular outlet/connector 23 and the blast machine can be used as an air jet for removing dust from a blasted surface prior to coating.

In general, the abrasive flow control structure according to the invention can be used with any blast machine after it is easily installed downstream the abrasive material storing tank and upstream the tube feeding abrasive material for the blast gun 5.

An advantage of this embodiment is that the abrasive flow formed at the outlet of the blast gun 5 has high intensity and high blasting effect. This characteristic was demonstrated in experiments and practices with preliminary screened sand as abrasive material, the air flow was provided at 1000 m³ per hour, and the pressure of compressed air was 7 kg/cm². Using the same blast gun with a steel sheet, the blasted surfaces all met the grade of SA 2.5 according to standards of NACE and SSPC, but when the flow control structure according to the invention, the blast duration is shortened significantly and the sand consumption was cut half.

A surprising result recorded in experiments with a blast machine in which the structure for continuously adjusting the flow of abrasive material according to the invention is that the abrasive flow is in a state of laminar flow of high speed with a very high convergence, and that abrasive flow has a blast effect much higher than any abrasive flow from conventional blast machines, which provide turbulent flows. In other words, an advantage of this embodiment is the high convergence without any flow-converging structures known in the art.

A further advantage of the abrasive flow control structure according to the invention is that the dimension of the blast gun can be increased significantly. In practice, the author of the invention has fabricated and used blast guns with the inner diameters up to 20 mm, which was larger than 16 mm inner diameter of the biggest blast guns known in the art.

Experiments with the blast guns of the invention also showed that the abrasive flow therefrom was convergent, forming a large and focal blast area, which was the cross-section perpendicular to the axis of the abrasive flow. In details, the blast area has the diameter of 20 cm at a distance of between 80 and 100 cm from the mouth of the blast gun, which is much bigger than a blast area of 10 cm diameter at the distance of 25 - 30 cm from the mouth of a conventional blast gun.

Thanks to bigger blast guns, blast machines according to the invention obtain a higher blasting capacity.

It is noteworthy that the blast machines with the incorporation of the abrasive flow control structure have a distinctive property, which is the convergent abrasive flow. More particularly, the blast effect remain high when the distance from the blast gun mouth to the subject of surface treatment varies in a large range, for example, from 20 cm to 100 cm, whereas conventional blast machines only work well when the same distance should be in a narrow range of 25 cm to 30 cm.

In a further preferred embodiment of the invention, a blast machine includes a blast gun according to the invention that is incorporated with an abrasive material storing tank. Thanks to the structure for continuously adjusting the abrasive material flow as discussed above, there is no choke in the path of the abrasive material and therefore, it is possible to design the abrasive material storing tank of any volume. In practice, the dimensions of the storing tank are calculated based on factors such as, for example, the amount of abrasive material needed for the blast process, the weight that any operator can move during operation and the total volume of the machine that allows easy moving thereof.

Since the structure for continuously adjusting the abrasive material flow helps avoid of choke in the path of the abrasive material, the abrasive material can be filled in the storing tank at a maximum level without impacts on the operation of blast machines. Therefore, in another embodiment of the present invention, the abrasive material is fed to a blast machine, that is to a working storing tank in a continuous manner by means of compressed air via a feeding gate.

In a preferred embodiment of a blast system according to the invention as illustrated in Figure 6, a blast machine thereof further includes an observatory gate 601 and a dust outlet 602 and the blast machine is fed with the abrasive material from the abrasive material storing 1 to a working tank 4 via a feeding system operated with compressed air, including a compressed air supply pipe and compressed air valves V1 and V2. The function of the observatory gate 601 is for monitoring the filling level of the abrasive material in the working tank 4 so as the inflow of abrasive material to the machine can be adjusted.

Because preliminary screened sand usually contains 30-40% of dust-causative fine particles that have not blast effect, the dust outlet 602 in this preferred embodiment helps minimize the dust produced and thereby control dust pollution yet keep the blast capacity intact when sand is used as abrasive material. The dust outlet 602 can be led away the workplace or connected to a dust filter 8 as shown in Figure 6.

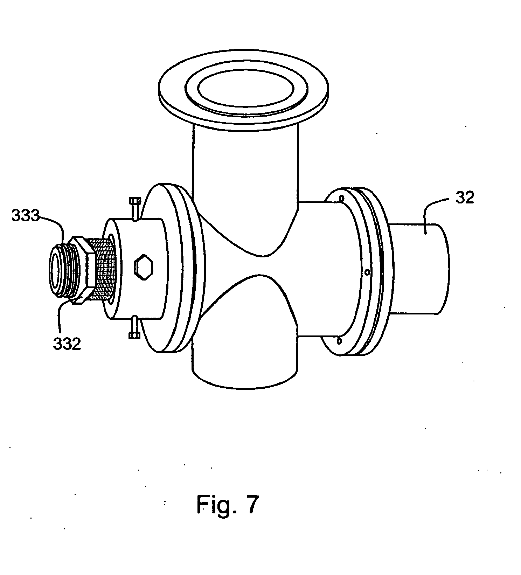

In a second aspect of the invention, as shown in Figure 7, an abrasive flow control structure according to the invention has a similar shape as the conventional structure used for mixing an abrasive material with compressed air, that is a cross-shaped tube with two pathways, one for the abrasive material and another for compressed air, the two pathways are perpendicular to each other and the juncture thereof forms a dispersion space.

An upper flange has holes (not shown in the figures) for mounting the structure to the outlet of the abrasive material storing tank. The upper flange may also have a brim to avoid of leakage of compressed air.

A distinctive feature of the structure for providing the abrasive flow according to the invention is that a plurality of components with certain structures and mounting manners is combined to create a Venturi crossing the dispersion space in order to make full use of the kinetic energy of the high-speed compressed air to bring the abrasive material into the dispersion space in a controllable manner.

As shown in Figures 7 through 9, the basic components of an abrasive flow control structure in an embodiment of the present invention include:
a cross-shaped tube body 2 with an upper mouth 2a to receive abrasive materials, a lower mouth 2b to discharge of abrasive materials when required;
a horizontal outer tube 32 mounted pivotally inside the cross-shaped tube body 2 with an end expanding to form a suitable connector for connecting with an abrasive flow conducting tube, the horizontal outer tube 32 has at least a first through-hole 321 adjacent to a plane being perpendicular to the horizontal axis and at the same time containing the vertical axis of the cross-shaped tube body 2;
a the horizontal inner tube 33 mounted inside the horizontal outer tube 32 with a first end expanding to form a connector for connecting with the high-speed compressed air flow conducting tube;
the inner diameter of the horizontal outer tube 32 and the inner diameter of the horizontal inner tube 33 are designed such that a horizontal dispersion space of Venturi structure is formed inside the cross-shaped tube body 2

In another embodiment, a blocking tube 31 mounted coaxially with the horizontal inner tube 33 and fixed to the cross-shaped tube body 2, the blocking tube 31 has at least one second through-hole 311 at the same position as that of the first through-hole 321 so as to form a gate adjusting the inflow of the abrasive material into the dispersion space G.

In this embodiment, the abrasive material flow into the dispersion space G can be adjusted by pivoting the horizontal outer tube 32 such that the horizontal outer tube 32 partially stops the second through-hole 311. In this embodiment, when the horizontal outer tube 32 is pivoted such that the first through-hole 321 overlaps the second through-hole 311 when observed from the radial direction, the flow of abrasive material that can enter the dispersion space is maximum.

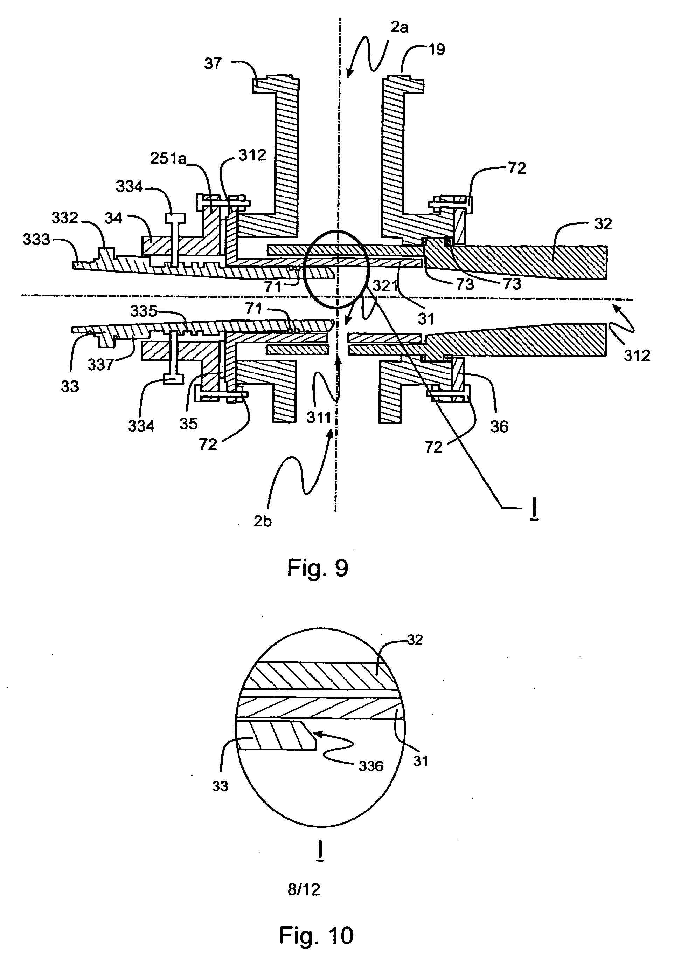

Details of components including the Venturi and adjusting structures, etc. are further shown in Figure 9. In an abrasive flow control structure according to the invention, the Venturi can be single, double or triple.

In a preferred embodiment with a double Venturi structure as shown in Figure 9, the passage of the flow on the horizontal axis from the compressed airflow inlet 44 to the abrasive flow outlet 312 varies as follows: it is narrowed in a certain part, then becomes instant because of the corresponding structure of the inner wall of the horizontal inner tube 33, then is further narrowed in a short distance prior to be instant thanks to the corresponding structure of the inner wall of the horizontal outer tube 32. As such, in this embodiment, two adjacent Venturi structures (i.e. a double Venturi) are respectively formed in the inner walls of the horizontal inner tube 33 and the horizontal outer tube 32.

In other embodiments, single Venturi structures are formed in the inner wall of the horizontal inner tube 33 or the horizontal outer tube 32, or the inner walls of the two tubes are fabricated to form a single passage having a Venturi structure or the like.

In other words, an abrasive flow control structure according to the invention can include a plurality of Venturi provided in series on the passage of the compressed air flow, and those structures are also called Venturi.

The blocking tube 31 has an end expanding to be a flange section 312 for welding it to the left mouth 2c of the cross-shaped tube body 2, the flange section 312 has through-holes for mounting the left flange 34 by means of bolts - nuts 72 and between the left flange 34 and the flange section 312 there is provided a buffer 35 to avoid of leakage of compressed air from inside the structure.

Advantages of this embodiment include easy fabrication and installation though it is possible to apply other conventional installation techniques to installation of those components, for instance, welding, molding or threading.

In the embodiments mentioned above, in order to avoid of compressed air leakage, the abrasive flow control structure according to the invention further includes other structures well known in the art. For instance, the horizontal inner tube 33 may have circumferential slots to mount O-ring(s) 71, preferably two O-rings as shown in the drawing.

In order to fix the position of the horizontal inner tube 33, the outer wall of the horizontal inner tube 33 may further have holes, while the left flange 34 may have through-holes for mounting stopping bolts 334 therethrough and locking thereby.

Besides, the outer wall of the horizontal inner tube 33 can be expanded to be a nut-like section 48 (as shown in Figure 2) for easy installation of the horizontal inner tube 33 with the compressed air conducting tube.

The outer wall of the horizontal outer tube 32 can be also expanded to form stepping structure 335 in order to secure close sealing when the horizontal outer tube 32 is mounted to the cross-shaped tube body 2 by means of a buffer ring 73 and a right flange 36.

In another preferred embodiment, a second end of the horizontal inner tube 33 projects above the through-hole 311. In this embodiment, the open of the through-hole 311 that leads the abrasive material into the dispersion space G in the cross-shaped tube body 2 is dependent not only on the deviation between the first through-hole 321 and the second through-hole 311 but also the projection of the projecting end of the horizontal inner tube 33. Therefore, an advantage of this embodiment is to provide an ability to tune the abrasive material inflow into the dispersion space, that is the abrasive material inflow into the abrasive flow. With this embodiment, the abrasive flow control structure according to the invention can use any abrasive material after appropriate trial runs and adjustment, that is to turn the horizontal outer tube 32 and to change the position of the horizontal inner tube 33, for instance, by changing the thickness of the buffer 35.

In another preferred embodiment, the second end of the horizontal inner tube 33 is tapered to form a conical face 336 as shown in Figure 10. In practice, this embodiment creates abrasive flows of high stability with no choke in the pathway that the abrasive material enters the abrasive flow. The effect of the tapered end mentioned above may be a result of change in the high-pressure air flow from laminar status to turbulent status. The author of the present invention has not conducted theoretical studies yet he found in practice an advantage of this embodiment that the abrasive flow is very stable yet controllable.

Although the horizontal inner tube 33 can be fixed to the cross-shaped tube body 2 as discussed above, in another preferred embodiment, the horizontal inner tube 33 is mounted pivotally inside the cross-shaped tube body 2. In this embodiment, in stead of locking into holes as described above, stopping bolts 334 abut against circumferential slots 331 which are formed on the outer wall of the horizontal inner tube 33. An advantage of this embodiment is easy fabrication, that is no need to calculate and fabricate the structure at any high accuracy for stopping bolts 334 to lock in holes as in other embodiments.

In an embodiment, the horizontal inner tube 33 is mounted inside the cross-shaped tune such that it can moves reciprocally along the axis thereof. This embodiment is realized by forming a plurality of circumferential slots 331. When inner tube 40 should be moved to adjust the abrasive flow, an operator needs only to loose stopping bolts 334 and move the horizontal inner tube 33, then tighten the stopping bolts 334. As such, this embodiment allows even easier tuning of the abrasive material flow into the dispersion space G.

In another preferred embodiment, the horizontal inner tube 33 is mounted inside the cross-shaped tube body 2 such that the reciprocating distance thereof can be adjusted continuously. In an embodiment, circumferential slots 331 are spiral. With this embodiment, an operator can easily tune continuously the abrasive material flow into the dispersion space by loosing stopping bolts 334, turning the horizontal inner tube 33 to a desired position, and then tighten the stopping bolts 334 so as to fix the horizontal inner tube 33 in the structure.

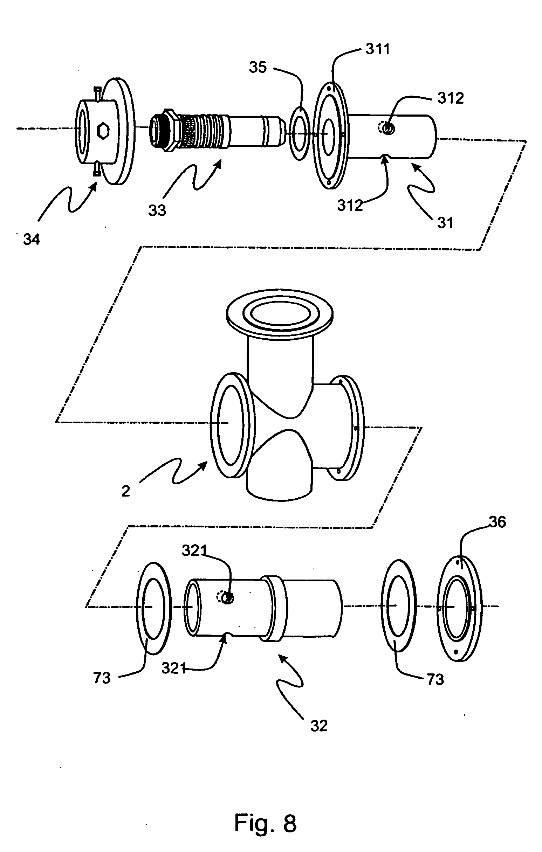

The nut-like section 332 formed on the inner wall of the horizontal inner tube 33 as described above facilitates the adjustment. Further, the outer surface of the horizontal inner tube 33 can also have nut-like sections (as shown in Figures 7 and 8) for the operator to manually turn the horizontal inner tube 33 without common tools such as spanners or wrenches.

For fabrication and/or installation, it is optional to employ any suitable sealing method in order to secure the air-tightness inside the structure according to the invention. Preferably, welding is employed for the components fixed one another and O-rings 19 for pivotally mounted components.

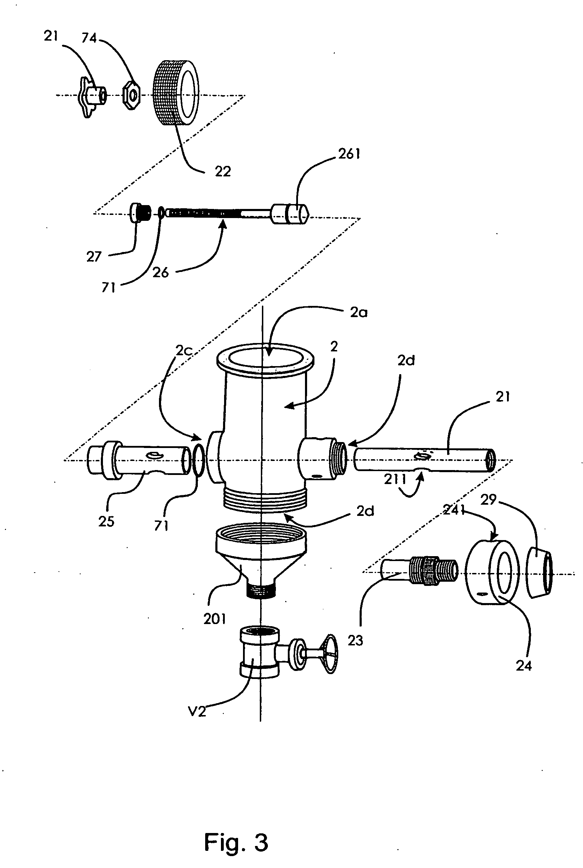

For example, in an embodiment as illustrated in Figures 3 and 4, an O-ring 71 is mounted between the flanges of the horizontal outer tube 25 and the left mouth 2c, respectively. It is possible to mount a fixing nut 29 to fix the horizontal outer tube 25 after the horizontal outer tube 25 is adjusted to a desired position. Figure 3 illustrates a discharging valve V2 mount to the cross-shaped tube body 2 via a threaded funnel-shape connecting part 201. In practice, the cross-shaped tube body 2 can be constructed by mounding as a whole or by welding tubular components to one another.

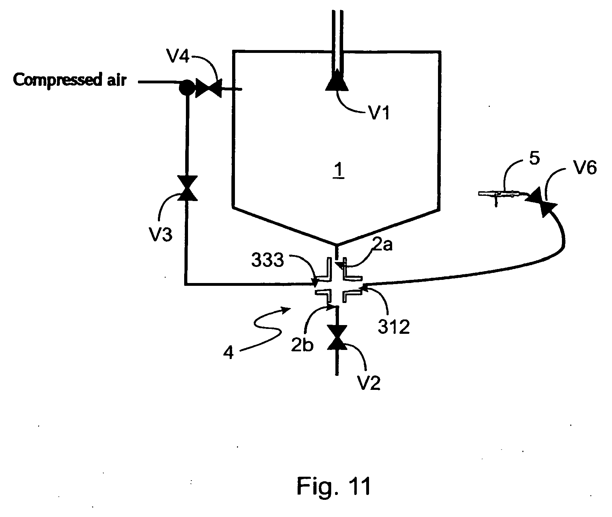

In order to achieve another objective of the present invention, that is a blast system capable of stable operation with any compressed air of very high flow rates and speeds, a blast system according to the invention includes a blast system known in the art, except that in which the cross-shaped tube body 2 is replaced with an abrasive flow control structure according to the invention as easily compared the conventional blast system shown in Figure 1 with a blast system according to the invention as shown in Figure 11. Another difference between the two systems is the absence of an abrasive material valve V5 in the latter.

In general, with no complicated components and because the structure for providing an abrasive flow according to the invention has the same shape and dimension as the conventional cross-shape tube, there is no hindrance to the installation of the abrasive flow control structure and/or a sprayer for spraying mist into the abrasive flow according to the invention to any available blast system.

In practice, the abrasive flow control structure according to the invention works perfectly when it is installed in the sand blast systems of some shipyards in Vietnam. A distinctive feature is that while in the systems available at shipyards, the compressed air valve V2 is usually opened in a limited range in order to avoid of choke (as discussed in the description of related arts above), when the cross-shaped tube body 2 is replaced with the abrasive flow control structure according to the invention, it is allowable to fully open the compressed air valve V3, meaning that the full capacity of compressed air supply systems can be utilized.

In a preferred embodiment, a blast system according to the invention includes
a source of compressed air,
an abrasive material storing tank 1,
an abrasive flow control structure to receive the abrasive material from the abrasive material storing tank 1 and the compressed air from the source of compressed air so as to form a high-speed abrasive flow,
a blast gun 5 receiving the high-speed abrasive flow,
a compressed air valve V3 adjusting the pressure of the compressed air fed to the structure, and
a pressure control valve V4 adjusting the pressure inside the storing tank.

The compressed air from the compressed air source is used to feed the abrasive flow control structure and at the same time to maintain a necessary pressure inside the abrasive material storing tank 1.

A distinctive and also advantageous feature of the blast system according to the invention is that with the presence of the abrasive flow control structure, operations of the system become very stable, regardless of difference in specific density and/or dimension of abrasive materials. In practice, the blast system according to the invention can work even with sand, inclusive of wet sand, as the abrasive material.

Another excellent feature is inherited from the possible adjustment of the abrasive material flow into the abrasive flow, and at the same time, the air flow is accelerated many folds on passing the double Venturi as described above, the abrasive flow from the blast system according to the invention has very high blasting effect and very low dust, and therefore the costs of operation and environmental protection are reduced significantly.

Furthermore, since the consumption of abrasive materials is lower, the expense on treatment of the used abrasive material, for instance, collection and rendering it inert, etc. is cut down significantly.

Unlike conventional blast systems which do not allow adjustment of the abrasive material flow rate in order to avoid of choke in the pathway of the abrasive material from the storing tank to the abrasive flow, an advantage of this embodiment is that an user, that is an operator of the blast gun, can adjust the abrasive material flow rate as desired by combined adjustment of the compressed air valve V3 and the pressure control valve V4 while the system run in a stable manner.

The operation of the blast system according to the invention is as follows: first, the abrasive flow control structure, that means the horizontal outer tube 32 and the horizontal inner tube 33 are adjusted appropriately with the sort of abrasive material to be used as mentioned above. Then the compressed air valve V3 is fully opened, and the pressure control valve V4 for adjusting the pressure inside the storing tank is adjusted until the desired abrasive flow is obtained.

During operation, it is also allowed to increase or decrease the content of the abrasive material in the abrasive flow by adjusting the pressure control valve V4 and/or to increase or decrease the dimension, convergence, kinetic energy, etc. of the abrasive flow via the compressed air valve V3.

Because the system has high stability (no choke), the adjustment is easy without any complicated measuring and controlling means.

In fact, an operator can observe the dimension and convergence of the resultant abrasive flow and adjust it as desired. That is also a distinctive feature of the blast system according to the invention because on operating other blast systems known in the art, the workplace is full of dust and operators usually fail to observe abrasive flows.

Another advantage of the abrasive flow formed in the blast system according to the invention is its high convergence. As such, the abrasive flow is focused and the blasting effect is high.

The convergence of the abrasive flow in the blast system according to the invention is demonstrated in practice.

Further, while blast machines known in the art always require operators to position the blast gun at most 50 cm from the surface to be treated, with the blast system according to the invention, the abrasive flow still has high blast effects when the distance from the blast gun to the surface is at least 1 m.

Another advantage of the blast system in which the abrasive flow control structure according to the invention is utilized is that when the pressure inside the abrasive material storing tank is adjusted, that is when the pressure is reduced by closing the pressure control valve V4, the abrasive material can no longer enter the abrasive flow control structure, but the compressed air flow still has high speeds and flow rates. And with such adjustment, the blast gun becomes a blow pipe which can be used for blowing surfaces prior to coating or for other purposes, for instance, cleaning machines and equipment.

For increasing the content of the abrasive material in the abrasive flow, i.e. increasing the abrasive material consumption, it suffices to adjust only the pressure control valve V4.

The abrasive material flow into the abrasive flow control structure is maximum when the pressure control valve V4 is fully opened. At that time, the pressure inside the storing tank is almost the same as the pressure of the compressed air flow into the dispersion space, and therefore, the abrasive material enters the dispersion space under gravity. That means the maximum abrasive material flow into the dispersion space is dependent on physical properties of the abrasive material (including dimension, specific density, shape, etc.) and pressure drops on related components.

In opposite, when the content of the abrasive material in the abrasive flow should be reduced, it is possible to adjust the pressure control valve V4. Depending on the open of the pressure control valve V4, together with gravity, the difference between the compressed air pressure and the pressure inside the storing tank makes change in the abrasive material flow into the abrasive flow control structure according to the invention.

The abrasive material flow into the abrasive flow control structure is zero (0) when the pressure control valve V4 is fully closed, because the high pressure of the compressed air flow prevents the abrasive material from going into the abrasive flow control structure.

In a preferred embodiment, an abrasive flow valve V6 is mounted on the passage of the abrasive flow. In practice, even after an operator has closed the abrasive flow valve V6, that is the abrasive material has been stopped and a small amount thereof remains in the abrasive flow conducting tube, still the system can work again when the operator reopens the abrasive flow valve V6. Naturally, depending on the amount and some other properties, for instance, moisture of the abrasive material to enter the abrasive flow, sometimes the discharging valve V2 should be opened prior to opening the abrasive flow valve V6.

In a preferred embodiment, a mist sprayer (not shown in the figures) is mounted in the passage of the abrasive flow. The present invention can employ any mist sprayer known in the art. With this embodiment, by opening or closing a water valve of the sprayer, an operator can optionally obtain a wet or dry abrasive flow.

Among other things, an advantage of wet abrasive flows is that dust is limited. Furthermore, some commercialized compositions allow prevent of oxidation of metallic surfaces within twenty four hours. Therefore, the blast system of this embodiment can conveniently utilize such compositions by simply connecting a water conducting tube with a tank of solutions of compositions mentioned above.

The blast system according to the invention can work well with the abrasive flow control structure discussed in the second aspect of the invention with some differences of pipe connections, which are easily made by a person skilled in the art.

It is noted that the embodiments described above are illustrative only for better understanding of the nature and scope of the invention, based on which, a person skilled in the art can made various modifications. For example, the flow diffusion structure can be molded as a whole, or the body thereof has only one leg to mount to the conical section.

The scope of the invention is defined by the appended claims.

The basic advantages of the structure for continuously adjusting the flow of abrasive material, the structure for accelerating the abrasive flow, the blast machine and the blast system in the first feature of the invention include their simplicity, easy and cost-effective fabrication, possibility to make full use of available known devices and equipment for significantly improved work. In details, that are the ability to use any and all sorts of abrasive materials, inclusive of natural sand with optional moisture, the low consumption of abrasive materials, the easy adjustment of abrasive material flows, the continuous operation, and more importantly, they help improve working conditions, that is to reduce dust pollution.

The basic advantages of the abrasive flow control structure in the second aspect of the invention include the supply of stable abrasive flows of high kinetic energy, the maximal use of the energy contained in compressed air, and thereby the blast system according to the invention has high blasting efficiency, low cost of operation and particularly low cost of environmental treatment.

Distinctive advantages of the blast system according to the invention include its high efficiency, low cost, easy operation and control.

### Referrals

| | | | |
|---|---|---|---|
| storing tank | 1 | Nut-like section | 332 |
| one-way valve | V1 | Air flow inlet | 333 |
| discharging valve | V2 | Stopping bolts | 334 |
| Compressed air valve | V3 | Stepping structure | 335 |
| Pressure control valve | V4 | Diagonally cut face | 336 |
| Abrasive material valve | V5 | Rough-faced section | 337 |
| Abrasive flow valve | V6 | Left flange | 34 |
| Cross-shaped tube body | 2 | Buffer | 35 |
| Upper mouth/ abrasive material inlet | 2a | Right flange | 36 |
| Lower mouth /abrasive material discharging gate | 2b | Upper flange | 37 |
| Left mouth/ compressed air inlet | 2c | Working tank | 4 |
| Right mouth /abrasive flow outlet | 2d | Blast gun | 5 |
| Dispersion space | G | | |
| Threaded funnel-shape connecting part | 201 | | |
| Suction tube/conducting tube | 21 | | |
| Suction tube hole(s) | 211 | | |
| Vent hole | 212 | | |
| Stopping cover | 22 | | |
| Tubular outlet | 23 | | |
| Negative pressure adjusting nut | 24 | | |
| Negative pressure adjusting hole | 241 | | |
| Horizontal outer tube | 25 | | |
| Outer tube hole | 251 | | |
| Stopping rod | 26 | | |
| Cylindrical stopping head | 261 | | |
| Positioning nut | 27 | | |
| Adjusting knob | 28 | | |
| Fixing nut | 29 | | |
| Blocking tube | 31 | | |
| First through hole | 311 | | |
| Abrasive flow outlet | 312 | | |
| Horizontal outer tube | 32 | | |
| Second through hole | 321 | | |
| Flange section | 312 | | |
| Brim | 313 | | |
| Horizontal inner tube | 33 | | |
| Circumferential slots | 331 | | |

## Claims

1. A structure for continuously adjusting a flow of an abrasive material dispersed in a high-pressure airflow, the structure comprises:
- a cross-shaped tube body (2) with an upper mouth (2a) as an abrasive material inlet , a lower mouth (2b), a left gate (2c) and a right gate (2d)
- a discharging valve (V2) mounted to the lower mouth (2b) of the cross-shaped tube body (2);
- a suction tube (21) inserted through and being coaxial with the line linking the center of the left gate (2c) and the center of the right gate (2d), and on the tubular wall of the suction tube there being at least one hole (211) facing the lower mouth (2b) of the cross-shaped tube body (2), and at least one vent hole (212) opening to the outside of the cross-shaped tube body (2);
- a stopping cover (22) stopping a first end of the suction tube (21);
- a tubular outlet (23) mounted to a second end of the suction tube (21), a part of the tubular outlet (23) being located inside the suction tube 21 and having the outer diameter smaller than inner diameter of the suction tube (21);
- a negative pressure adjusting nut (24) with at least one negative pressure adjusting hole (241) of the same position and dimension as those of the vent hole (212) of the suction tube (21),
- an outer tube (25) mounted coaxially and outside the suction tube (21), on the tubular wall of the outer tube (25) there being at least one outer tube hole (251) of the dimension and position substantially similar with those of the suction tube hole (211) of the suction tube 21, the at least one outer tube hole (251) of the horizontal outer tube (32) and the at least one suction tube hole (211) forming at least one inlet of the abrasive material with the openness of the at least one inlet being continuously variable when the suction tube (21) and the horizontal outer tube (25) being pivoted to each other;
whereby the flow rate of the abrasive material is continuously adjustable by means of rotating the horizontal outer tube (32).

2. A structure as claimed in claim 1, **characterized in that** the suction tube (21) has three suction tube holes (211) with the centers thereof being located on a plane perpendicular to the suction tube (21), and at least one of the three suction tube holes (211) faces the lower mouth (2b) of the cross-shaped tube body (2).

3. A structure as claimed in claim 1 or 2, further comprising a stopping rod (26) tightly and slidably mounted inside the suction tube (21), an end of the stopping rod (26) extending to form a cylindrical stopping head (261) which projects to the abrasive material inlet and is positioned such that when the stopping rod (26) reciprocally moves inside the suction tube (21), the cylindrical stopping head (261) closes or opens the abrasive material inlet;

4. A structure as claimed in claim 3, **characterized in that** a part of the cylindrical stopping head (261) that projects to the suction tube hole(s) has a conical surface.

5. An abrasive flow control structure for providing a high-speed abrasive flow, the structure comprises:
a cross-shaped tube body (2) with an upper mouth (2a) to receive abrasive materials, a lower mouth (2b) to discharge of abrasive materials when required;
a horizontal outer tube (32) mounted pivotally inside the cross-shaped tube body with an end expanding to be a structure to connect with an abrasive flow conducting tube, the horizontal outer tube (32) has at least a first through-hole (321) adjacent to a plane perpendicular to the horizontal axis being adjacent to and containing the vertical axis of the cross-shaped tube body (2);
a horizontal inner tube (33) mounted inside the horizontal outer tube (32) with a first end expanding to form a connector for connecting with the high-speed compressed air flow conducting tube;
**characterized in that** the inner diameter of the horizontal outer tube (32) and the inner diameter the horizontal inner tube (33) is designed such that a horizontal dispersion space of Venturi structure is formed inside the cross-shaped tube body (2).

6. A structure as claimed in claim 5, further comprising a blocking tube (31) mounted coaxially with the horizontal inner tube (33) and fixed to the cross-shaped tube body (2), the blocking tube (31) has at least a second through-hole (311) at the same position as that of the first through-hole (321) so as to form a valve adjusting the inflow of the abrasive material into the dispersion space.

7. A structure as claimed in claim 5 or 6, **characterized in that** an end of the inner tube (33) projects above the first through-hole(s) (321).

8. A structure as claimed in claim 7, **characterized in that** the end of the inner tube that projects above the first through-hole(s) (321) is tapered.

9. A structure as claimed in any of claims 5 to 8, **characterized in that** the inner tube is mounted pivotally inside the cross-shaped tube body (2).

10. A structure as claimed in any of claims 5 to 9, **characterized in that** the horizontal inner tube (33) is mounted inside the cross-shaped tube body such that it can move reciprocally along the axis thereof.

11. A structure as claimed in any of claims 5 to 10, **characterized in that** the horizontal inner tube (33) is mounted inside the cross-shaped tube body (2) such that the reciprocating distance thereof can be adjusted continuously.

12. A blast system comprising
a source of compressed air,
an abrasive material storing tank,
the structure as claimed in any of claims 5 to 11 to receive the abrasive material from the abrasive material storing tank and the compressed air from the source of compressed air so as to form a high-speed abrasive flow,
a blast gun receiving the high-speed abrasive flow,
a valve adjusting the pressure of the compressed air fed to the structure, and
a valve adjusting the pressure inside the storing tank.

13. A blast system as claimed in claim 12, further comprising an observatory gate and a dust outlet, the blast system is fed with an abrasive material to the storing tank via a feeding system being operated by means of compressed air.

14. A blast system as claimed in claim 12 or 13, further comprising a locking valve which is mounted on the passage of the abrasive flow.

15. A blast system as claimed in any of claims 12 to 14, further comprising a mist sprayer which is mounted in the passage of the abrasive flow.

## Patentansprüche

1. Struktur zum ununterbrochenen Einstellen einer Strömung von Schleifmaterial, das in einer Hochdruck-Luftströmung dispergiert ist, wobei die Struktur enthält:
- einen kreuzförmigen Rohrkörper (2) mit einer oberen Mündung (2a) als einen Schleifmaterialeinlass, einer unteren Mündung (2b), einer linken Blendenöffnung (2c) und einer rechten Blendenöffnung (2d),
- ein Entleerungsventil (V2), das an der unteren Mündung (2b) des kreuzförmigen Rohrkörpers (2) montiert ist;
- ein Saugrohr (21), das in die Leitung, die das Zentrum der linken Blendenöffnung (2c) mit dem Zentrum der rechten Blendenöffnung (2d) verbindet, und koaxial hierzu eingesetzt ist, wobei in der Rohrwand des Saugrohrs wenigstens ein Loch (211) vorhanden ist, das der unteren Mündung (2b) des kreuzförmigen Rohrkörpers (2) zugewandt ist, und wenigstens ein Entlüftungsloch (212) vorgesehen ist, das in die äußere Umgebung des kreuzförmigen Rohrkörpers (2) mündet;
- eine Anschlagabdeckung (22), die ein erstes Ende des Saugrohrs (21) hält;
- einen rohrförmigen Auslass (23), der am zweiten Ende des Saugrohrs (21) montiert ist, wobei sich ein Teil des rohrförmigen Auslasses (23) in dem Saugrohr (21) befindet und einen Außendurchmesser besitzt, der kleiner ist als der Innendurchmesser des Saugrohrs (21) ;
- eine Unterdruck-Einstellmutter (24), die wenigstens ein Unterdruck-Einstellloch (241) mit der gleichen Position und Abmessung wie jene des Entlüftungslochs (212) des Saugrohrs (21) besitzt,
- ein Außenrohr (25), das koaxial und außerhalb des Saugrohrs (21) montiert ist, wobei in der rohrförmigen Wand des Außenrohrs (25) wenigstens ein Außenrohrloch (251) mit der Abmessung und der Position, die jenen des Saugrohrlochs (211) des Saugrohrs (21) im Wesentlichen ähnlich sind, vorhanden ist, wobei das wenigstens eine Außenrohrloch (251) des horizontalen Außenrohrs (32) und das wenigstens eine Saugrohrloch (211) wenigstens einen Einlass für das Schleifmaterial bilden, wobei der Öffnungsgrad des wenigstens einen Einlasses kontinuierlich veränderbar ist, wenn das Saugrohr (21) und das horizontale Außenrohr (25) relativ zueinander geschwenkt werden;
wodurch die Durchflussmenge des Schleifmaterials durch Drehen des horizontalen Außenrohrs (32) kontinuierlich einstellbar ist.

2. Struktur nach Anspruch 1, **dadurch gekennzeichnet, dass** das Saugrohr (21) drei Saugrohrlöcher (211) besitzt, deren Zentren sich in einer Ebene senkrecht zu dem Saugrohr (21) befinden, wobei wenigstens eines der drei Saugrohrlöcher (211) der unteren Mündung (2b) des kreuzförmigen Rohrkörpers (2) zugewandt ist.

3. Struktur nach Anspruch 1 oder 2, die ferner eine Anschlagstange (26) enthält, die in dem Saugrohr (21) dicht und gleitfähig montiert ist, wobei ein Ende der Anschlagstange (26) so verläuft, dass es einen zylindrischen Anschlagkopf (261) bildet, der zu dem Schleifmaterialeinlass vorsteht und in der Weise positioniert ist, dass dann, wenn sich die Anschlagstange (26) in dem Saugrohr (21) hin und her bewegt, der zylindrische Anschlagkopf (261) den Schleifmaterialeinlass verschließt oder öffnet.

4. Struktur nach Anspruch 3, **dadurch gekennzeichnet, dass** ein Teil des zylindrischen Anschlagkopfes (261), der zu dem bzw. den Saugrohrlöchern vorsteht, eine konische Oberfläche besitzt.

5. Schleifströmungs-Steuerstruktur für die Schaffung einer Hochgeschwindigkeits-Schleifströmung, wobei die Struktur enthält:
einen kreuzförmigen Rohrkörper (2) mit einer oberen Mündung (2a), um Schleifmaterialien zu empfangen, einer unteren Mündung (2b), um Schleifmaterialien auszugeben, wenn dies erforderlich ist;
ein horizontales Außenrohr (32), das in dem kreuzförmigen Rohrkörper schwenkbar montiert ist, wobei sich ein Ende zu einer Struktur erweitert, um eine Verbindung mit einem Schleifströmungs-Leitungsrohr herzustellen, wobei das horizontale Außenrohr (32) wenigstens ein erstes Durchgangsloch (321) in der Nähe einer Ebene senkrecht zu der horizontalen Achse besitzt, die zu der vertikalen Achse des kreuzförmigen Rohrkörpers (2) benachbart ist und diese enthält;
ein horizontales Innenrohr (33), das in dem horizontalen Außenrohr (32) montiert ist, wobei ein erstes Ende erweitert ist, um einen Verbinder für die Verbindung mit dem Leitungsrohr für die Hochgeschwindigkeits-Druckluftströmung zu bilden;
**dadurch gekennzeichnet, dass** der Innendurchmesser des horizontalen Außenrohrs (32) und der Innendurchmesser des horizontalen Innenrohrs (33) in der Weise entworfen sind, dass in dem kreuzförmigen Rohrkörper (2) ein horizontaler Dispersionsraum mit Venturi-Struktur gebildet wird.

6. Struktur nach Anspruch 5, die ferner ein Blockierrohr (31) enthält, das koaxial zu dem horizontalen Innenrohr (33) montiert ist und an dem kreuzförmigen Rohrkörper (2) befestigt ist, wobei das Blockierrohr (31) wenigstens ein zweites Durchgangsloch (311) an derselben Position wie das erste Durchgangsloch (321) besitzt, um ein Ventil zu bilden, das die Eingangsströmung des Schleifmaterials in den Dispersionsraum einstellt.

7. Struktur nach Anspruch 5 oder 6, **dadurch gekennzeichnet, dass** ein Ende des Innenrohrs (33) über das bzw. die ersten Durchgangslöcher (321) vorsteht.

8. Struktur nach Anspruch 7, **dadurch gekennzeichnet, dass** das Ende des Innenrohrs, das über das bzw. die ersten Durchgangslöcher (321) vorsteht, konisch zuläuft.

9. Struktur nach einem der Ansprüche 5 bis 8, **dadurch gekennzeichnet, dass** das Innenrohr in dem kreuzförmigen Rohrkörper (2) schwenkbar montiert ist.

10. Struktur nach einem der Ansprüche 5 bis 9, **dadurch gekennzeichnet, dass** das horizontale Innenrohr (33) in dem kreuzförmigen Rohrkörper in der Weise montiert ist, dass es sich längs dessen Achse hin und her bewegen kann.

11. Struktur nach einem der Ansprüche 5 bis 10, **dadurch gekennzeichnet, dass** das horizontale Innenrohr (33) in dem kreuzförmigen Rohrkörper (2) in der Weise montiert ist, dass die Strecke seiner Hin- und Herbewegung kontinuierlich eingestellt werden kann.

12. Blassystem, das enthält:
eine Druckluftquelle,
einen Schleifmaterial-Speichertank,
die Struktur nach einem der Ansprüche 5 bis 11, um das Schleifmaterial von dem Schleifmaterial-Speichertank und die Druckluft von der Druckluftquelle zu empfangen, um eine Hochgeschwindigkeits-Schleifströmung zu erzeugen,
eine Blaskanone, die die Hochgeschwindigkeits-Schleifströmung empfängt,
ein Ventil, um den Druck der Druckluft, die der Struktur zugeführt wird, einzustellen, und
ein Ventil, um den Druck in dem Speichertank einzustellen.

13. Blassystem nach Anspruch 12, das ferner eine Beobachtungsblendenöffnung und einen Staubauslass enthält, wobei das Blassystem mit einem Schleifmaterial zu dem Speichertank über ein Beschickungssystem versorgt wird, das mittels Druckluft betätigt wird.

14. Blassystem nach Anspruch 12 oder 13, das ferner ein Verriegelungsventil enthält, das in dem Durchgang der Schleifströmung montiert ist.

15. Blassystem nach einem der Ansprüche 12 bis 14, das ferner eine Nebelsprüheinrichtung enthält, die in dem Durchlass der Schleifströmung montiert ist.

## Revendications

1. Structure pour réguler de façon continue un flux d'un matériau abrasif qui est dispersé dans un flux d'air à haute pression, la structure comprenant:
un corps de tube en forme de croix (2) qui comporte une ouverture supérieure (2a) faisant office d'entrée de matériau abrasif, une ouverture inférieure (2b), une porte gauche (2c) et une porte droite (2d);
une soupape de décharge (V2) qui est montée à l'ouverture inférieure (2b) du corps de tube en forme de croix (2);
un tube d'aspiration (21) qui est inséré à travers et qui est coaxial à la ligne qui relie le centre de la porte gauche (2c) et le centre de la porte droite (2d), et au moins un trou (211) est prévu sur la paroi tubulaire du tube d'aspiration en face de l'ouverture inférieure (2b) du corps de tube en forme de croix (2), et au moins un trou d'aération (212) s'ouvre vers l'extérieur du corps de tube en forme de croix (2);
un couvercle d'arrêt (22) pour arrêter une première extrémité du tube d'aspiration (21);
une sortie tubulaire (23) qui est montée sur une deuxième extrémité du tube d'aspiration (21), une partie de la sortie tubulaire (23) étant située à l'intérieur du tube d'aspiration (21) et présentant un diamètre extérieur inférieur au diamètre intérieur du tube d'aspiration (21);
un écrou de réglage de pression négative (24) qui comporte au moins un trou de réglage de pression négative (241) dont la position et la dimension sont identiques à celles du trou d'aération (212) du tube d'aspiration (21);
un tube extérieur (25) qui est monté coaxialement et à l'extérieur du tube d'aspiration (21), au moins un trou de tube extérieur (251) étant prévu sur la paroi du tube extérieur (25) et dont la dimension et la position sont sensiblement similaires à celles du trou de tube d'aspiration (211) du tube d'aspiration (21), ledit au moins un trou de tube extérieur (251) du tube extérieur horizontal (32) et ledit au moins un trou de tube d'aspiration (211) formant au moins une entrée du matériau abrasif, où l'ouverture de ladite au moins une entrée peut varier de façon continue lorsque le tube d'aspiration (21) et le tube extérieur horizontal (25) pivotent l'un par rapport à l'autre,
dans laquelle le débit du matériau abrasif peut être réglé de façon continue en tournant le tube extérieur horizontal (32).

2. Structure selon la revendication 1, **caractérisée en ce que** le tube d'aspiration (21) comporte trois trous de tube d'aspiration (211) dont les centres sont situés sur un plan qui est perpendiculaire au tube d'aspiration (21), et au moins un des trois trous de tube d'aspiration (211) est situé en face de l'ouverture inférieure (2b) du corps de tube en forme de croix (2).

3. Structure selon la revendication 1 ou 2, comprenant en outre une tige d'arrêt (26) qui est montée de façon serrée et coulissante à l'intérieur du tube d'aspiration (21), une extrémité de la tige d'arrêt (26) s'étendant de manière à former une tête d'arrêt cylindrique (261) qui fait saillie en direction de l'entrée de matériau abrasif et qui est positionnée de telle sorte que, lorsque la tige d'arrêt (26) effectue un mouvement alternatif à l'intérieur du tube d'aspiration (21), la tête d'arrêt cylindrique (261) ferme ou ouvre l'entrée de matériau abrasif.

4. Structure selon la revendication 3, **caractérisée en ce qu'**une partie de la tête d'arrêt cylindrique (261) qui fait saillie en direction du/des trou(s) du tube d'aspiration présente une surface conique.

5. Structure de régulation de flux abrasif pour former un flux abrasif à grande vitesse, la structure comprenant:
un corps de tube en forme de croix (2) qui comporte une ouverture supérieure (2a) destinée à recevoir des matériaux abrasifs, et une ouverture inférieure (2b) pour décharger les matériaux abrasifs lorsque cela est nécessaire;
un tube extérieur horizontal (32) qui est monté de façon pivotante à l'intérieur du corps de tube en forme de croix avec une extrémité qui s'étend pour former une structure à connecter à un tube de conduite de flux abrasif, le tube extérieur horizontal (32) comportant au moins un premier trou traversant (321) qui est situé dans le voisinage d'un plan perpendiculaire à l'axe horizontal adjacent à et contenant l'axe vertical du corps de tube en forme de croix (2); et
un tube intérieur horizontal (33) qui est monté à l'intérieur du tube extérieur horizontal (32) avec une première extrémité qui s'étend pour former un connecteur à connecter au tube de conduite de flux d'air comprimé à grande vitesse,
**caractérisée en ce que** le diamètre intérieur du tube extérieur horizontal (32) et le diamètre intérieur du tube intérieur horizontal (33) sont conçus de telle sorte qu'un espace de dispersion horizontal d'une structure Venturi soit formé à l'intérieur du corps de tube en forme de croix (2).

6. Structure selon la revendication 5, comprenant en outre un tube de blocage (31) qui est monté coaxialement avec le tube intérieur horizontal (33) et qui est fixé au corps de tube en forme de croix (2), le tube de blocage (31) comporte au moins un deuxième trou traversant (311) qui est situé à la même position que celle à laquelle le premier trou traversant (321) est situé de manière à former une vanne pour réguler le flux entrant du matériau abrasif dans l'espace de dispersion.

7. Structure selon la revendication 5 ou 6, **caractérisée en ce qu'**une extrémité du tube intérieur (33) fait saillie au-dessus du/des premier(s) trou(s) traversant (s) (321).

8. Structure selon la revendication 7, **caractérisée en ce que** l'extrémité du tube intérieur qui fait saillie au-dessus du/des premier(s) trou(s) traversant(s) (321) est conique.

9. Structure selon l'une quelconque des revendications précédentes 5 à 8, **caractérisée en ce que** le tube intérieur est monté de façon pivotante à l'intérieur du corps de tube en forme de croix (2).

10. Structure selon l'une quelconque des revendications précédentes 5 à 9, **caractérisée en ce que** le tube intérieur horizontal (33) est monté à l'intérieur du corps de tube en forme de croix de telle sorte qu'il puisse effectuer un mouvement alternatif le long de l'axe de celui-ci.

11. Structure selon l'une quelconque des revendications précédentes 5 à 10, **caractérisée en ce que** le tube intérieur horizontal (33) est monté à l'intérieur du corps de tube en forme de croix (2), de telle sorte que la distance du mouvement alternatif de celui-ci puisse être réglée de façon continue.

12. Système de décapage, comprenant:
une source d'air comprimé,
un réservoir de stockage de matériau abrasif,
la structure selon l'une quelconque des revendications 5 à 11 pour recevoir le matériau abrasif en provenance du réservoir de stockage de matériau abrasif et l'air comprimé en provenance de la source d'air comprimé de manière à former un flux abrasif à grande vitesse,
un pistolet de décapage qui reçoit le flux d'abrasif à grande vitesse,
une soupape pour régler la pression de l'air comprimé qui est amené à la structure, et
une soupape pour régler la pression à l'intérieur du réservoir de stockage.

13. Système de décapage selon la revendication 12, comprenant en outre une porte d'observation et une sortie de poussière, le système de décapage étant alimenté avec un matériau abrasif vers le réservoir de stockage par l'intermédiaire d'un système d'alimentation qui est actionné en utilisant de l'air comprimé.

14. Système de décapage selon la revendication 12 ou 13, comprenant en outre une vanne de blocage qui est montée sur le passage du flux abrasif.

15. Système de décapage selon l'une quelconque des revendications 12 à 14, comprenant en outre un pulvérisateur de brouillard qui est monté dans le passage du flux abrasif.
